Europäisches Patentamt

**European Patent Office**

**Office européen des brevets**

(11) Numéro de publication: **0 251 853 B1**

(12) **FASCICULE DE BREVET EUROPEEN**

(45) Date de publication de fascicule du brevet: **25.03.92**

(51) Int. Cl.5: **G06F 12/14**, G06F 1/00, G07F 7/10

(21) Numéro de dépôt: **87401324.6**

(22) Date de dépôt: **12.06.87**

(54) **Circuit intégré pour la mémorisation et le traitement d'informations de manière confidentielle comportant un dispositif anti-fraude.**

(30) Priorité: **13.06.86 FR 8608589**

(43) Date de publication de la demande:
**07.01.88 Bulletin 88/01**

(45) Mention de la délivrance du brevet:
**25.03.92 Bulletin 92/13**

(84) Etats contractants désignés:
**CH DE ES FR GB IT LI**

(56) Documents cités:
**FR-A- 2 311 360**
**US-A- 4 211 919**
**US-A- 4 295 041**

(73) Titulaire: **THOMSON COMPOSANTS MILITAI-RES ET SPATIAUX**
**173, Bd Haussmann**
**F-75008 Paris(FR)**

(72) Inventeur: **Lisimaque, Gilles**
**Thomson-CSF SCPI 19,avenue de Messine**
**F-75008 Paris(FR)**
Inventeur: **Fruhauf, Serge**
**Thomson-CSF SCPI 19,avenue de Messine**
**F-75008 Paris(FR)**

(74) Mandataire: **Ruellan-Lemonnier, Brigitte et al**
**THOMSON-CSF SCPI**
**F-92045 PARIS LA DEFENSE CEDEX 67(FR)**

## Description

La présente invention a pour objet un circuit intégré pour la mémorisation et le traitement d'informations de manière confidentielle comportant un dispositif anti-fraude. Elle concerne plus particulièrement, mais non exclusivement, les circuits intégrés du type ci-dessus connus sous la dénomination de cartes à mémoire.

Les cartes à mémoire sont réalisées avec un circuit intégré électronique comportant essentiellement une mémoire non volatile programmable électriquement comprenant souvent des données confidentielles non-modifiables, des moyens d'entrée/sortie permettant d'accoupler le circuit à un dispositif de transfert de données et des moyens de traitement interconnectés entre les moyens d'entrée-sortie et la mémoire. Dans certaines applications des cartes à mémoire, il est impératif de protéger l'accès à certaines zones de la mémoire non volatile par une clé d'accès telle qu'un code confidentiel associé à certains droits de lecture ou d'écriture dans ces zones spécifiques. Il existe de nombreux dispositifs permettant de dissuader les fraudeurs qui cherchent à découvrir le code secret ou la clé d'accès à une mémoire par essais successifs. Parmi ces dispositifs, le plus connu est sans doute celui qui mémorise d'une façon permanente les erreurs de clé et bloque le fonctionnement dès que le nombre des erreurs dépasse une valeur prédéterminée. Cependant, ce dispositif est inefficace s'il est utilisé seul. En effet, lorsque l'on programme à "1" une cellule-mémoire, il y a variation du courant et l'observation de la variation du courant d'écriture dans la mémoire permet de déterminer avec précision le passage d'une clé bonne à condition de limiter correctement ce courant de façon qu'un enregistrement des erreurs ne puisse se produire. Pour remédier à cet inconvénient, la technique actuellement utilisée consiste à programmer dans tous les cas une information provoquant ainsi une consommation de courant. Dans ce cas, un fraudeur ne peut pas reconnaître les essais corrects des essais incorrects par la mesure du courant externe consommé par le composant. Le fraudeur ne peut donc pas être informé des résultats des actions qu'il entreprend. Ce fonctionnement, bien qu'efficace, présente un grave inconvénient. Il nécessite une place mémoire relativement importante pour enregistrer les tentatives correctes qui sont en fait les plus fréquentes. Or, dans le cas d'une mémoire non volatile de type EPROM ou similaire, il ne sera pas possible de réutiliser cette place. D'autre part, il n'est pas utile de conserver trace des tentatives correctes qui ne sont pas utilisées par la suite à l'inverse des tentatives erronées qui doivent être utilisées pour bloquer le système. Le brevet US 4,295,041 décrit un tel système.

Pour remédier à cet inconvénient, l'homme de l'art peut penser à ne programmer qu'une seule et même cellule de mémoire non volatile dans le cas où une information présentée est correcte et à ne programmer des cellules différentes que dans le cas où l'information présentée est incorrecte. Ceci permet un gain de mémoire important. Toutefois, une cellule-mémoire déjà programmée présente une courbe de consommation de courant différente d'une cellule-mémoire vierge. En effet, une cellule-mémoire vierge d'une mémoire non volatile présente une pointe de consommation de courant d'environ 2 % en début de programmation, pointe qui est pratiquement résorbée après 2 millisecondes. Or, cette pointe de consommation n'existe plus dans le cas où la cellule est reprogrammée. Il est donc toujours possible pour un fraudeur de détecter le passage d'une clé bonne.

Enfin, on connaît des dispositifs à fusibles dans lesquels on simule la consommation de courant engendrée par la fusion du fusible. Ces dispositifs sont grossiers étant donné que le courant consommé lors de la fusion peut avoir des allures très variables (brevet FR 2 311 360).

La présente invention a pour but de remédier aux inconvénients de l'art antérieur tout en utilisant un seul point pour la programmation des tentatives correctes.

La présente invention a pour objet un circuit intégré pour la mémorisation et le traitement d'informations de manière confidentielle tel que défini dans la revendication 1.

Avec ce système, le fraudeur ne peut plus être informé du résultat des actions qu'il entreprend puisque, quels que soient les résultats inscrits dans la première zone mémoire ou simulés sur la cellule, on observe la même consommation de courant.

Dans la définition de la présente invention, on précisera pour l'homme de l'art les points ci-après :

Par traitement d'informations, on entend soit le simple transfert de données entre le circuit intégré et un système extérieur, soit le transfert et l'exécution d'un certain nombre d'opérations à l'intérieur du circuit lui-même.

Par comparateur, on entend non seulement un simple comparateur effectuant la comparaison entre les données d'habilitation et le code confidentiel ou clé d'accès, mais aussi tout système qui, à partir des données d'habilitation ou du code confidentiel ou clé d'accès, effectue un certain nombre d'opérations en vue d'autoriser la poursuite des opérations.

Par moyen de traitement, on entend tous les circuits nécessaires à l'écriture et la lecture des données dans la mémoire ainsi qu'au traitement de ces données. De manière générale, le moyen de traitement est constitué par un microprocesseur muni de ses circuits annexes bien connu de l'homme de l'art.

Selon un mode de réalisation préférentiel de la présente invention, lorsque la première zone mémoire est constituée par une mémoire non volatile dont les cellues-mémoire sont formées de transistors à grille flottante, la cellule de simulation est constituée par un transistor à grille flottante dont la grille flottante est court-circuitée avec la grille de commande et qui présente la même tension grille-source qu'une cellule-mémoire de la première zone mémoire. La même tension grille-source peut être obtenue en appliquant sur la grille de commande de la cellule de simulation une tension de commande d'écriture égale à $\gamma$x la tension de commande d'écriture appliquée sur les cellules-mémoire de la première zone mémoire, $\gamma$ étant le facteur de couplage d'un transistor à grille flottante. En fait, la cellule conforme à la présente invention n'est pas une cellule-mémoire, car elle n'enregistre pas de bit, mais une cellule simulant au niveau du courant une programmation, d'où son appellation de cellule de simulation.

D'autres caractéristiques et avantages de la présente invention apparaîtront à la lecture de la description d'un mode de réalisation faite ci-après avec référence aux dessins ci-annexés dans lesquels:

- la figure 1 représente schématiquement sous forme de blocs les différentes parties d'un circuit intégré auquel peut s'appliquer la présente invention,
- la figure 2 représente schématiquement un mode de réalisation d'une cellule-mémoire de la première zone mémoire connectée à ses circuits de commande,
- les figures 3A et 3B représentent respectivement une vue en coupe et une vue en plan de dessus de la cellule-mémoire de la figure 2,
- les figures 4A et 4B représentent respectivement une vue en coupe et une vue en plan de dessus d'un mode de réalisation d'une cellule de simulation conforme à la présente invention, et
- la figure 5 représente schématiquement la cellule de simulation des figures 4A et 4B connectée à des circuits de commande.

Pour simplifier la description, dans les dessins les mêmes éléments portent les mêmes références.

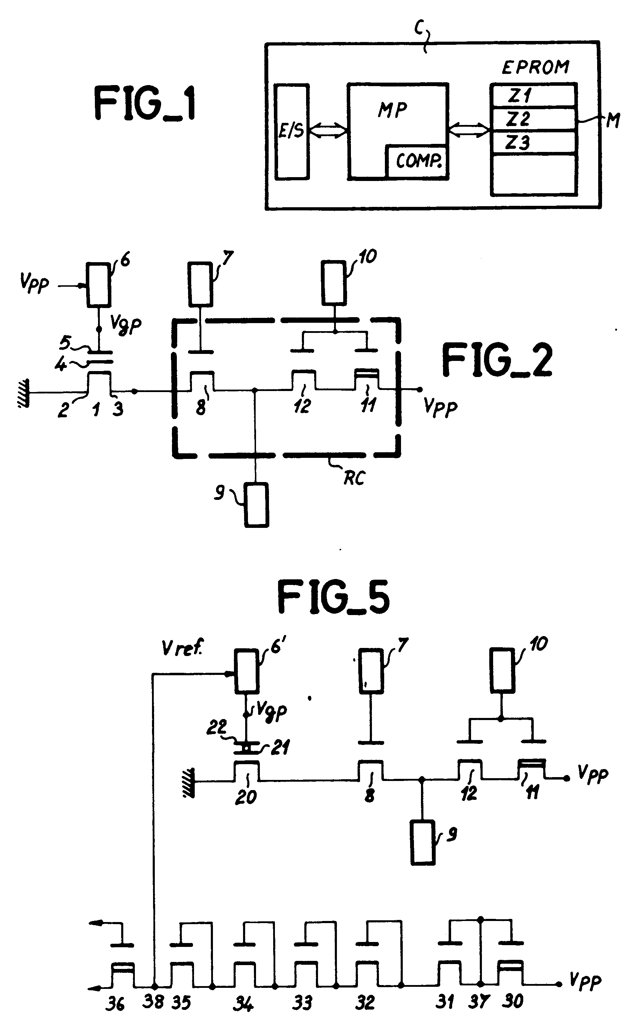

Sur la figure 1, on a représenté à titre d'exemple, une carte à mémoire C, comme circuit intégré mettant en oeuvre la présente invention. Il est évident pour l'homme de l'art que d'autres circuits intégrés peuvent être envisagés pour la mise en oeuvre de la présente invention.

La carte à mémoire C représentée sur la figure 1 comporte essentiellement une mémoire non volatile M programmable électriquement, par exemple une mémoire EPROM, un dispositif d'entrée/sortie E/S permettant d'accoupler ladite carte à un dispositif de transfert de données extérieur, et un microprocesseur MP interconnecté enter le dispositif d'entrée/sortie E/S et ladite mémoire M. Pour permettre le traitement de certaines informations de manière confidentielle, la carte à mémoire contient des données d'habilitation. Ces données d'habilitation sont, en général, programmées dans une zone Z1 de la mémoire EPROM. D'autre part, pour ce traitement confidentiel, les données d'habilitation contenues dans la zone Z1 doivent être en général comparées avec une clé d'accès ou code confidentiel entré de l'extérieur par l'intermédiaire du dispositif d'entrée/sortie E/S. En conséquence, le microprocesseur MP comporte des moyens de comparaison dénommés comparateur d'identification COMP destiné à comparer les données d'habilitation contenues dans la zone Z1 au code confidentiel ou clé d'accès introduit par l'intermédiaire du dispositif E/S. Selon un mode de réalisation de l'art antérieur, ce comparateur d'identification COMP est associé à des moyens pour mémoriser dans une première zone mémoire non volatile un bit d'erreur lorsque la clé d'accès est erronée. Cette première zone mémoire est constituée, dans le mode de réalisation représenté, par une zone Z2 de la mémoire EPROM M. D'autre part, lorsque le code introduit n'est pas erroné, le comparateur d'identification envoie le bit d'accès dans une deuxième zone mémoire qui est constituée par la zone Z3 de la mémoire EPROM M.

Comme mentionné dans l'introduction, la mémorisation de tous les essais non erronés dans la zone mémoire Z3 consomme beaucoup de place mémoire. Aussi, conformément à la présente invention, la zone mémoire Z3 peut être limitée à une seule cellule dite cellule de simulation qui, lorsqu'elle est activée, consomme le même courant qu'une cellule mémoire jamais programmée de la première zone mémoire.

Dans le cas des mémoires non volatiles programmables électriquement de type EPROM dans lesquelles la cellule-mémoire est constituée par un transistor à grille flottante, la cellule de simulation conforme à la présente invention sera constituée par un transistor à grille flottante dont la grille flottante est reliée à la grille de commande. D'un point de vue technologique, cette cellule de simulation peut être réalisée dans un même plan mémoire qu'une cellule EPROM classique et sélectionnée en utilisant les mêmes décodeurs et circuits de commande, comme cela sera expliqué de manière plus détaillée ci-après.

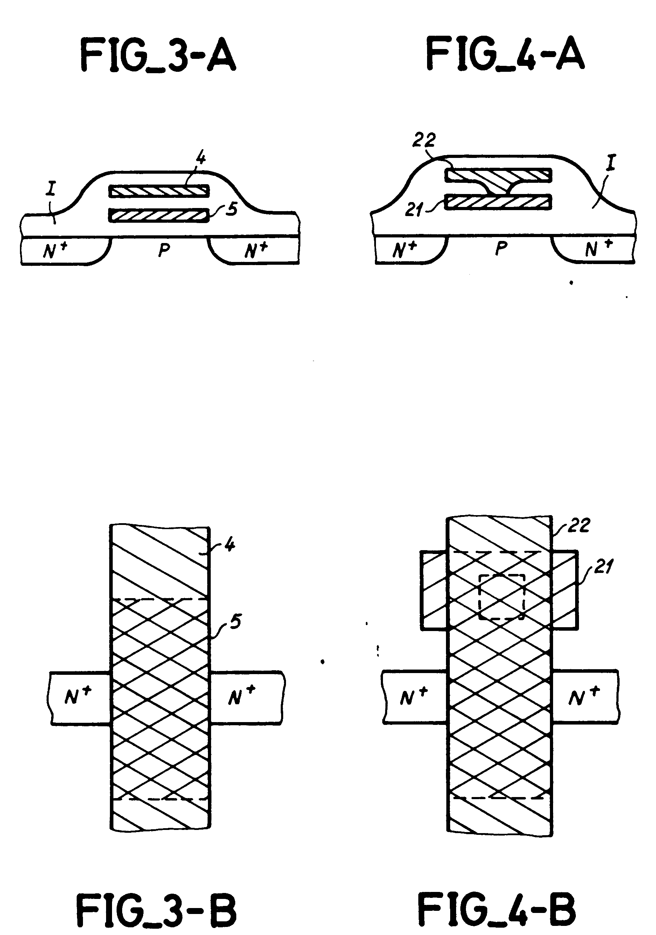

Ainsi, selon un mode de réalisation de la présente invention, la première zone mémoire Z2 destinée à enregistrer les bits d'erreur est constituée par une zone mémoire de type EPROM dont les cellules-mémoire sont formées de transistors à grille flottante 1 tels que représentés sur les figures 2 et 3. Chaque transistor à grille flottante 1 comporte deux électrodes principales respectivement 2 et 3 et une grille de commande 5 empilée sur la grille flottante 4. Dans le cas d'un transistor MOS à canal N, tel que représenté sur les figures 3A et 3B, les électrodes 2 et 3 sont constituées par des diffusions $N^+$ dans un substrat de type P. La grille flottante 5 et la grille de commande 4 sont réalisées par exemple en silicium polycristallin tandis que l'isolant I est lui réalisé en oxyde de silicium $SiO_2$. Une des électrodes principales, à savoir l'électrode 2 dans le mode de réalisation représenté, est reliée à la masse tandis que l'électrode 3 est reliée par l'intermédiaire d'une ligne de bit non représentée et d'un transistor MOS formant interrupteur 8 à un décodeur d'adresse colonne 7. La grille de commande 5 est reliée par l'intermédiaire d'une autre connexion dite ligne de mots non représentée à un décodeur d'adresse de lignes 6. Les lignes de bit et lignes de mot sont arrangées en lignes et en colonnes pour déterminer une matrice incluant la cellule-mémoire 1 de manière connue de l'homme de l'art. En fait, le décodeur d'adresse colonne 7 est relié à la grille du transistor 8 dont l'une des électrodes principales est reliée à l'électrode 3 du transistor 1 tandis que son autre électrode principale est reliée par l'intermédiaire d'un circuit constitué des transistors MOS 11 et 12 à la tension de polarisation Vpp. De manière plus spécifique, le transistor MOS 11 est un transistor déplété dont l'une des électrodes est reliée à la tension Vpp tandis que l'autre électrode est reliée à une des électrodes du transistor MOS 12 qui est un transistor enrichi. Les deux grilles des transistors 11 et 12 sont reliées en commun à un circuit 10 de commande de la programmation. L'autre électrode du transistor 12 est donc reliée à une des électrodes du transistor MOS 8 formant interrupteur, le point milieu entre les transistors 12 et 8 étant relié à un amplificateur de lecture 9.

Pour programmer à "1" une cellule-mémoire du type de celle représentée à la figure 2, on applique sur sa grille de commande 5 une tension de programmation égale à Vpp, en sélectionnant ladite cellule-mémoire 1 par l'intermédiaire des décodeurs 6 et 7. Dans ce cas, les transistors 8, 11 et 12 correspondent à une résistance de charge et la tension de drain VD est égale à Vpp - Vcharge, tandis que la tension grille Vgp est égale à Vpp.

On décrira maintenant avec référence aux figures 4 et 5, une cellule de simulation conforme à la présente invention. Dans le mode de réalisation représenté, la cellule de simulation fait partie du champ mémoire EPROM M. Toutefois, il est évident pour l'homme de l'art que cette cellule de simulation peut être réalisée et commandée de manière indépendante directement à partir du comparateur d'identification. Comme représenté sur les figures 4A et 4B, la cellule de simulation est constituée par un transistor MOS à grille flottante 20 dont la grille flottante 21 a été reliée à la grille de commande 22. Dans le mode de réalisation représenté, cette cellule de simulation 20 est connectée à un décodeur d'adresse de rangée 6′ et aux mêmes circuits décodeur d'adresse colonne 7 et commande de la programmation 10 que la cellule-mémoire de la figure 2. En fait, la cellule de simulation 20 peut être connectée au même circuit décodeur d'adresse de rangée 6 que la cellule-mémoire de la figure 2, si l'on peut commander sur les décodeurs eux-mêmes le signal Vpp et le signal Vréf. utilisé pour obtenir le même courant de programmation. Dans l'exemple de réalisation représenté, on a choisi pour consommer moins d'utiliser deux décodeurs d'adresse de rangée différents 6, 6′, l'un recevant Vpp, l'autre recevant Vréf., mais la rangée sélectionnée est la même, c'est-à-dire que les deux décodeurs décodent la même adresse-mémoire.

Conformément à la présente invention, pour éviter les fraudes la cellule de simulation doit se comporter lors de la programmation de la même manière que la cellule-mémoire 1. Pour ce faire, il faut donc avoir la même droite de charge, c'est-à-dire la même tension drain-source Vds et la même tension grille-source Vgs.

Dans le mode de réalisation représenté, Vds = Vpp-Vcharge et est identique dans les deux cas.

D'autre part, Vgs = $\gamma$ Vgp.

En conséquence, la même tension grille-source dans une cellule de simulation que dans une cellule normale est obtenue en utilisant le facteur $\gamma$. En effet, quand on programme une cellule-mémoire, on vient charger la grille flottante et par conséquent sur la grille de commande, on a un rapport capacitif dû à cette charge. Ainsi, par exemple, si Vpp = 22 volts, sur la grille de commande, on a une tension de 22 volts x $\gamma$ sur la grille flottante. Aussi, conformément à la présente invention, au lieu d'appliquer Vpp sur l'ensemble grille de commande/grille flottante de la cellule de simulation 20, on appliquera une tension Vréf. qui sera égale à $\gamma$ Vpp.

Conformément à la préente invention, cette tension Vréf. peut être obtenue à partir de la tension Vpp en utilisant un circuit soustracteur de tension. Ce circuit soustracteur de tension est constitué par le transistor MOS déplété 30, par un montage en cascade de cinq transistors MOS 31, 32, 33, 34, 35 connectés chacun en diode et par un transistor MOS déplété 36.

De manière plus spécifique, une première électrode principale du transistor 30 est reliée à la source de tension Vpp et sa deuxième électrode principale est reliée en un point 37 à la première électrode du transistor 31. Les grilles des transistors 30 et 31 sont reliées ensemble et sont reliées au point 37. La deuxième électrode principale du transistor 31 est reliée à la première électrode principale du transistor 32. Le transistor déplété 30 a en fait deux rôles. Son premier rôle est de protéger les transistors 31 à 36 par rapport à la tension Vpp car il possède une meilleure tenue à des tensions de l'ordre de Vpp, à savoir 20 V. Son deuxième rôle est de contrôler le courant dans la chaîne des transistors et, par conséquent, la valeur de Vréf..

Dans le montage en cascade des transistors 31, 32, 33, 34 et 35, les grilles de commande de chacun de ces transistors sont reliées à leur drain. Chacun constitue donc une diode et occasionne une chute de potentiel VT calibrée. D'autre part, la deuxième électrode du transistor 35 est reliée à la première électrode principale du transistor déplété 36 dont la deuxième électrode principale et la grille sont reliées à Vss. Le transistor 36 est donc toujours conducteur. Il canalise le courant de Vpp vers Vss et permet une meilleure stabilité de la tension Vréf.. Vréf. est une référence de tension et absorbe peu de courant.

Avec le montage ci-dessus, on obtient donc au niveau du point 38 la tension de référence Vréf = Vpp - 5 VT, VT étant choisi de telle sorte que 5VT = $\gamma$.

Ce circuit a été réalisé dans un cas particulier pour lequel :
Vpp = 22 V
$\gamma \approx 0,7$
VT = $V_{TO}$ + $K_B \phi_T$ = 1,2 V($K_B$ étant le coefficient d'effet substrat).

Dans la technologie choisie, les transistors ont un $V_{TO}$ de 0,9V, mais quand leur source est à un potentiel supérieure à Vss, un effet substrat se rajoute et on obtient alors un $V_T$ de 1,2V.

Il est évident pour l'homme de l'art que d'autres circuits peuvent être envisagés pour obtenir la tension de référence tels que des circuits élévateurs de tension ou circuits pompes, ou encore des circuits plus complexes avec des transistors avec une tension de seuil spéciale, avec des cellules-mémoire ou autres.

## Revendications

1. Circuit intégré pour la mémorisation et le traitement d'informations de manière confidentielle comprenant au moins :
   - une mémoire (M) non volatile programmable électriquement, contenant entre autres des données d'habilitation,
   - des moyens d'entrée/sortie (E/S) permettant de coupler le circuit à un dispositif de transfert de données,
   - des moyens de traitement (MP) interconnectés entre les moyens d'entrée/sortie et la mémoire non volatile, lesdits moyens de traitement comportant, entre autres, un comparateur (COMP) d'identification destiné à comparer des données d'habilitation à un code confidentiel ou clé d'accès introduit par l'intermédiaire des moyens d'entrée/sortie, le comparateur d'identification étant associé à des moyens pour mémoriser dans une première zone de mémoire (Z2) non volatile un bit d'erreur lorsque le code introduit est erroné, et une cellule de simulation (20), activée lorsque le code introduit est correct, cette cellule consommant un courant identique au courant nécessaire à la programmation du bit d'erreur dans la première zone de mémoire,
   
   ce circuit étant caractérisé en ce que la cellule de simulation est constituée par un transistor à grille flottante dont la grille flottante est courtcircuitée avec la grille de commande et qui présente la même tension grille-source qu'un transistor à grille flottante constituant une cellule de mémoire de la première zone de mémoire.

2. Circuit intégré selon la revendication 1, caractérisé en ce que la tension grille-source de la cellule de simulation est obtenue en appliquant sur la grille de commande de la cellule de simulation une tension de commande d'écriture (Vréf) égale à gamma fois la tension de commande d'écriture appliquée sur les cellules de mémoire de la première zone de mémoire, gamma étant le facteur de couplage du transistor à grille flottante.

## Claims

1. An integrated circuit for memorizing and confidentially processing information, comprising at least
   - an electrically programmable non-volatile memory (M), containing among other data authorization data,
   - input/output means (E/S) adapted to couple the circuit to a data transfer device,
   - processing means (MP) connected between the input/output means and the non-volatile memory, said processing means comprising, among other items, an identifcation comparator (COMP) for comparing authorization data with a confidential code or access key fed in via the input/output means, the identification comparator being associated with means for storing an error bit in a first zone (Z2) of the non-volatile memory, when the input code is wrong, and a simulation cell (20) which is activated when the input code is correct, said cell consuming a current which is identical to the current necessary for programming the error bit in the first memory zone, characterized in that the simulation cell is constituted by a floating gate transistor, whose floating gate is short-circuited with the control gate and to which is applied the same gate-source-voltage as in case of a floating transistor which constitutes a storage cell in the first memory zone.

2. A circuit according to claim 1, characterized in that the gate-source-voltage of the simulation cell is obtained by applying a write control voltage (Vref) to the control gate of the simulation cell which is equal to $\gamma$ times the write control voltage applied to the memory cells of the first memory zone, with $\gamma$ being the coupling factor of the floating gate transistor.

**Patentansprüche**

1. Integrierte Schaltung zur Speicherung und vertraulichen Verarbeitung von Informationen, mit mindestens folgenden Komponenten:
   - einem nichtflüchtigen, elektrisch programmierbaren Speicher (M), der unter anderem Zulassungsdaten enthält,
   - Eingangs-/Ausgangsmittel (E/S), die das Ankoppeln der Schaltung an eine Datenübertragungseinrichtung ermöglichen,
   - Verarbeitungsmittel (MP), die zwischen die Eingangs-/Ausgangsmittel und den nichtflüchtigen Speicher geschaltet sind und unter anderem einen Identifikationskomparator (COMP) zum Vergleichen von Zulassungsdaten mit einem vertraulichen Code oder Zugangsschlüssel, der durch die Eingangs-/Ausgangsmittel eingegeben wird, wobei der Identifikationskomparator mit Mitteln zur Speicherung eines Fehlerbit im Falle, daß der eingegebene Code falsch ist, in einer ersten Zone (Z2) des nichtflüchtigen Speichers verbunden ist und eine Simulationszelle (20) aufweisen, die aktiviert wird, wenn der eingegebene Code richtig ist, wobei diese Zelle einen Strom verbraucht, der mit dem für die Programmierung des Fehlerbits in der ersten Zone des Speichers benötigte Strom identisch ist, dadurch gekennzeichnet, daß die Simulationszelle aus einem Transistor mit offenem Gate besteht, wobei dieses Gate mit dem Steuergate kurzgeschlossen ist und der Transistor die gleiche Gate-Source-Spannung aufweist wie ein Transistor mit offenem Gate, der eine Speicherzelle der ersten Speicherzone bildet.

2. Integrierte Schaltung nach Anspruch 1, dadurch gekennzeichnet, daß die Gate-Source-Spannung der Simulationszelle durch Anlegen einer solchen Schreibsteuerspannung (Vref) an das Steuergate der Simulationszelle erhalten wird, die dem $\gamma$-fachen der an die Speicherzellen der ersten Speicherzone angelegten Schreibsteuerspannung entspricht, wobei $\gamma$ der Kopplungsfehler des Transistors mit offenem Gate ist.

# FIG_1

# FIG_2

# FIG_5

# FIG_3-A

# FIG_4-A

# FIG_3-B

# FIG_4-B